# EUROPEAN PATENT APPLICATION

(11) **EP 4 557 110 A2**
(43) Date of publication of application: **21.05.2025**
(21) Application number: 25168979.0
(22) Date of filing: 07.02.2023
(51) Int. Cl.: G06F 12/1027

(54) **APPLICATION SPACE FILTERING FOR TLB INVALIDATION**

(62) Divisional of application: 23709523.7
(71) Applicant: GOOGLE LLC, Mountain View CA 94043 (US)
(72) Inventor: SADAYAN EBRAMSAH MO ABDUL, Sadayan Ghows Ghani, Mountain View, 94043 (US); TSANG, Nicholas Hok Kiu, Mountain View, 94043 (US); KOU, Leigang, Mountain View, 94043 (US)
(74) Representative: Marks & Clerk GST

(57) **Abstract**

Methods, systems, and apparatus, including computer programs encoded on a computer storage medium, for determining whether to perform a translation lookaside buffer (TLB) invalidation procedure. In one aspect, a system comprises a computing device configured to receive a request to perform the TLB invalidation procedure, where the request specifies an application space identifier (ASID) for multiple virtual addresses. The computing device is configured to maintain multiple Bloom filters, where each Bloom filter corresponds to a respective hash function, and the computing device provides the ASID as input to each hash function to obtain multiple hash values. The computing device is configured to determine whether one of the hash values is not represented in one of the Bloom filters, and, in response, the computing device bypasses performing the TLB invalidation procedure.

## Description

### BACKGROUND

This specification relates to techniques for determining whether to perform a translation lookaside buffer (TLB) invalidation procedure based on multiple Bloom filters.

TLBs are specialized cache structures at a computing device for optimizing the translation of virtual memory addresses to physical memory addresses in systems using segmented or virtual memory. In such systems, each process addresses its memory space using virtual addresses, which are separate from the physical addresses of the actual memory locations storing the process data. Entries of the mapping from virtual addresses to physical addresses are stored in the TLB by caching entries from a page table. A TLB stores frequently used entries to avoid having to access the page table for each address translation in order to improve translation performance. In some examples, the entry may be moved while stored in the TLB, and the TLB entry can become invalid. In this example, the computing device can perform a TLB invalidation procedure to remove the entry from the TLB, which may increase the efficiency of the TLB. However, in some instances, such as the case when the entry is not present in a large TLB, the computing device searches through the entire large TLB structure to determine that the entry is not present, which can increase power consumption and inefficiency.

### SUMMARY

This specification describes how a system can determine whether to perform a translation lookaside buffer (TLB) invalidation procedure for TLB entries associated with an application based on a non-address characteristic of TLB entries. The non-address characteristic can be an identifier of the application itself, e.g., an application space identifier (ASID) of the application; or a virtual machine identifier (VMID) for the application. For example, the system can pass an ASID through multiple Bloom filters to determine whether the TLB lacks entries for that ASID. If so, the system need not scan the TLB to invalidate such entries, which reduces the overhead of TLB invalidation procedures. When examples below discuss using the ASID of an application, the same techniques can be used for any other appropriate characteristic of virtual addresses or their corresponding TLB entries, e.g., a VMID.

Particular embodiments of the subject matter described in this specification can be implemented so as to realize one or more of the following advantages.

The system described in this specification can allow a computing device to determine whether to perform a TLB invalidation procedure by using Bloom filters with an ASID. In conventional systems that perform such TLB invalidation procedures, a computing device receives an instruction from another computing device to remove an application space identifier associated with multiple virtual addresses. The computing device can remove any entry associated with the application space identifier by walking through the cache structure of the TLB. However, virtual addresses for that ASID may not actually be included in the TLB, and the computing device may delay other functions by searching for an entry that is not present. For example, the computing device might have to walk through the entire cache structure of the TLB to search for the one or more entries associated with the application space identifier, which can require many cycles.

The performance impact on performing needless TLBI procedures increases with cache size. For relatively small cache sizes, e.g., 128-entry cache structuresa computing device may be able to determine whether an entry is present in the TLB in a single cycle, due to the relatively small number of entries.

However, larger cache structures, such as a Level 2 (L2) cache, can contain a relatively larger number of entries and might not be fully associative. In this case, the computing device cannot scan the L2 cache structure in a single cycle to find the entry. The computing device must scan the L2 cache structure over multiple cycles. For example, the L2 cache structure can be a set associative structure with 4096 entries. The cache structure is divided into multiple sets containing multiple entries (e.g., 128 sets with 32 entries per set). The computing device can scan one set at a time, and the computing device takes multiple cycles to scan each set in the entirety of the cache structure. The inability to search for an entry in a single cycle delays the TLB invalidation procedure and other procedures at the computing device, even if the entry is not present in the L2 cache structure.

In contrast, the system described in this specification need not scan the entire cache structure on every invalidation request to determine whether or not the requested entry is represented in the cache. The systems and techniques described in this specification can allow a computing device to quickly determine whether to skip or perform the TLB invalidation procedure. The computing device uses multiple Bloom filters corresponding to multiple hash functions to determine whether entries of an application space identifier (ASID) are represented in the TLB. Based on whether the entry is represented according to values given by the multiple Bloom filters, the computing device can walk through the cache structure in search of the entry or can bypass the TLB invalidation procedure entirely, which can decrease the delay associated with performing the TLB invalidation procedure and conserve computational resources of the computing device.

Additionally, using an ASID to scan the TLB is more efficient than using virtual addresses. The computing device may have to scan each set in search of a virtual address to perform the invalidation procedure, while using an ASID, the computing device might not need to scan each set.

In some implementations, the computing device maintains the multiple Bloom filters using a respective hash function for each Bloom filter. The computing device is configured to add the entries present in the TLB to the Bloom filter using the respective hash functions to set a hash value. The computing device can scan the Bloom filter for a requested entry using the respective hash function. The computing device can determine whether the requested entry is not represented in the TLB if the requested entry is not represented in the Bloom filter, or whether the requested entry is potentially present in the TLB if the requested entry is represented in the Bloom filter. The computing device is configured to bypass the TLB invalidation procedure if the computing device determines that the requested entry is not represented in the TLB based on the Bloom filter. By bypassing the TLB invalidation procedure, the computing device reduces the number of cache structure searches and cycles, which can lead to greater TLB efficiency and greater overall system performance.

The details of one or more embodiments of the subject matter of this specification are set forth in the accompanying drawings and the description below. Other features, aspects, and advantages of the subject matter will become apparent from the description, the drawings, and the claims.

### BRIEF DESCRIPTION OF THE DRAWINGS

FIG. 1 is a block diagram of an example system.
FIG. 2 is a flow diagram of an example process for determining whether to perform the TLBI procedure.
FIG. 3 is a flow diagram of an example process for performing the TLB invalidation procedure.
FIG. 4 is a flow diagram of an example process for determining whether to reinitialize a Bloom filter.

Like reference numbers and designations in the various drawings indicate like elements.

### DETAILED DESCRIPTION

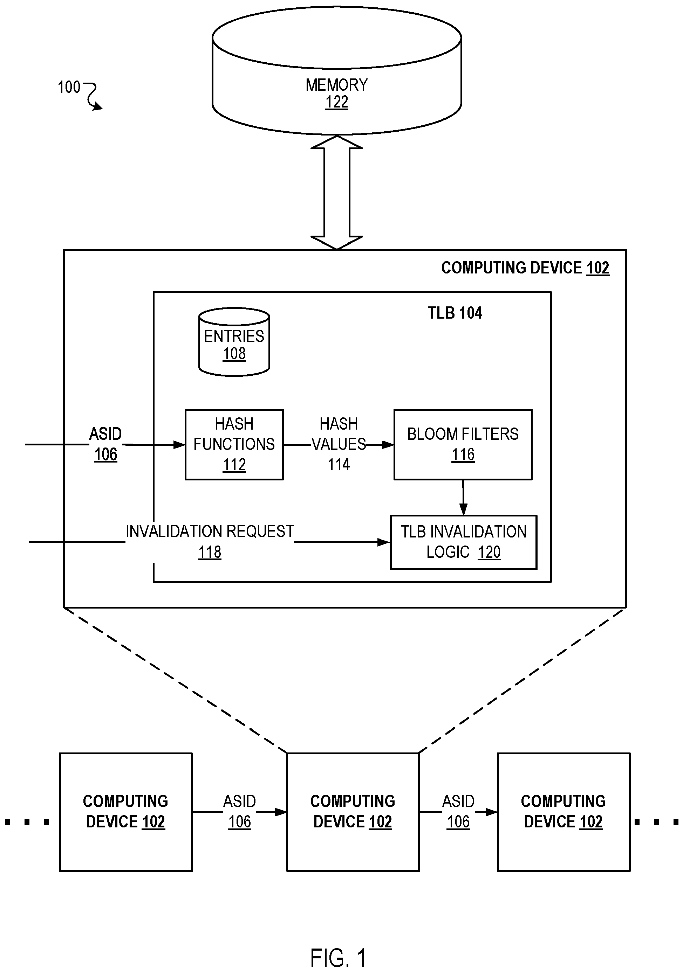

FIG. 1 shows an example system 100. The system 100 is an example of a system in which the systems, components, and techniques described below are implemented.

The system 100 is configured to determine whether to perform a TLB invalidation procedure for an application space identifier (ASID) or another non-address characteristic of a virtual address, e.g., a virtual machine identifiers (e.g., VMIDs).

The system 100 includes multiple computing devices 102 and a main memory 122. The multiple computing devices 102 can send ASIDs 106 to each other to perform memory operations. Each computing device 102 can be coupled to the main memory 122.

Each computing device 102 can process ASIDs 106, which can be encountered during normal operation of storing virtual address translation mappings, or from another computing device 102, which each computing device can interpret to as a request to invalidate TLB entries associated with that ASID.

The TLB 104 is an example of a special purpose cache that is used in virtual address translation. The TLB 104 stores mappings from virtual memory addresses to physical memory addresses by caching entries.

When the computing device 102 receives an ASID 106 from another computing device, the computing device 102 can seek to invalidate all virtual address entries in the TLB associated with the ASID 106.

The TLB 104 includes storage for TLB entries 108 that each store mappings of virtual addresses to physical addresses in the main memory 122. The TLB 104 also includes a set of hash functions 112 and a set of Bloom filters 116. A Bloom filter 116 is a data structure that can be used to determine whether an element is not present in a set. In this example, the computing device 102 can use the Bloom filters 116 to determine whether an entry is not represented in the TLB 104 based on its ASID. The computing device 102 can set the values of the Bloom filters 116 using hash functions 112.

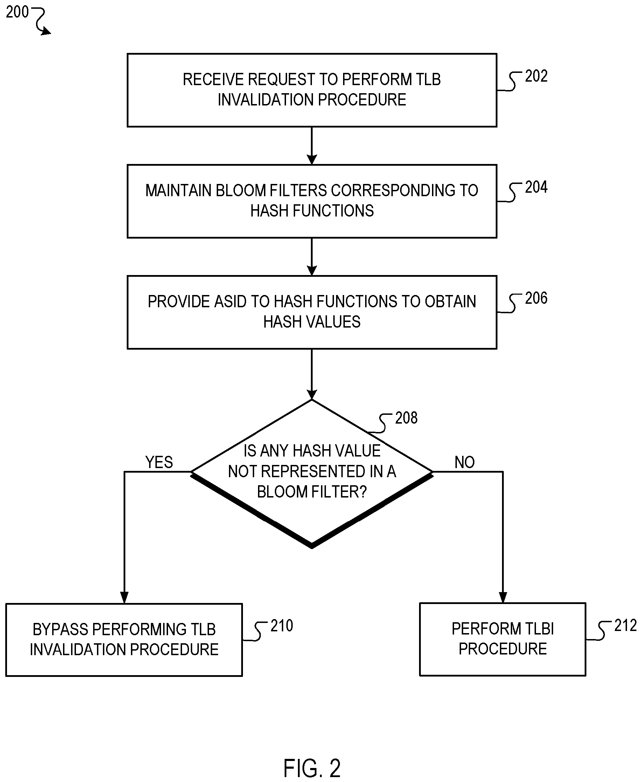

The hash functions 112 can be implemented in logic circuitry that is configured to generate a hash value from an input. The logic circuitry of the hash functions 112 can implement a function that produces output values that are all the same number of bits. For example, the computing device 102 can input an ASID value into a hash function 112 to obtain a corresponding hash value. The computing device 102 can then set the hash value for a corresponding Bloom filter 116, a process that is described in further detail below with reference to FIG. 2.

In this example, the computing device 102 is configured to access the TLB 104 and to use Bloom filters 116 to determine whether to perform a TLB invalidation procedure for a particular ASID. The computing device 102 can populate the Bloom filters 116 using the set of hash functions 112 as TLB entries 108 are added during normal operation. The computing device 102 can for example generate a hash value of the ASID of each of the entries 108, either before or after they are cached, and can set the hash values of the entries 108 by updating the corresponding values in each of the Bloom filters 116. Therefore, the Bloom filters 116 include data that represents all of the ASIDs of the entries 108 that are cached in the TLB 104.

Regardless of the implementation, when the computing device 102 receives an invalidation request 118, the computing device 102 can consult the TLB 104 to determine if the TLB 104 stores a mapping for the particular virtual address associated with the ASID 106 indicated by the invalidation request 118.

In this example, the computing device 102 can receive the invalidation request 118 from another computing device 102. The invalidation request 118 can include a request to perform a TLB invalidation procedure, e.g., using TLB invalidation logic 120 that invalidates cached TLB entries with an ASID indicated by the request 118.

The computing device 102 generates multiple hash values from the multiple hash functions 112 that correspond respectively to each of the Bloom filters 116. In some implementations, the computing device 102 determines if the TLB 104 stores a mapping for the entries associated with the ASID 106 by checking the hash values with their corresponding Bloom filters 116. The computing device 102 uses the multiple hash functions 112 to generate respective hash values from the ASID 106. The computing device 102 can check the Bloom filters 116 using respective hash values of the multiple hash functions 112 to determine whether to bypass searching for entries having the ASID 106.

If the computing device 102 determines that each hash value of the respective hash values is represented in each Bloom filter 116, the computing device 102 can perform the TLB invalidation procedure 120, e.g., by searching through and invalidating all TLB entries having the associated ASID. If however the computing device 102 determines that any hash value of the respective hash values is not represented in its respective Bloom filter 116, the computing device 102 can bypass performing the TLB invalidation procedure, which saves the computing device 102 from having to search for any TLB entries having the associated ASID. This process is described in further detail with reference to FIG. 2.

FIG. 2 is a flow diagram of an example process for determining whether to perform the TLBI procedure. For convenience, the process 200 will be described as being performed by a computing device, , e.g., the computing device 102 of FIG. 1, appropriately configured in accordance with this specification.

The computing device receives a request to perform the TLB invalidation procedure (202). The request can include an instruction received from another computing device to remove the entries associated with an ASID.

The computing device 102 maintains multiple Bloom filters that correspond to multiple hash functions (204) by performing fill operations.

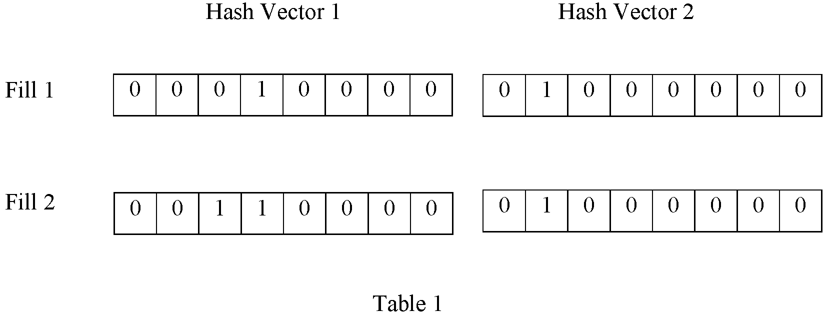

The computing device can perform fill operations of the Bloom filters by providing an ASID as input to each of the multiple hash functions. The computing device can initialize a Bloom filter by initializing a vector that includes a set of values (e.g., values of zero). The computing device generates a set of multiple hash values for the ASID. For example, as shown above in reference to Table 1, the computing device can use two Bloom filters with two corresponding hash vectors. The computing device can input an ASID into a first hash function that corresponds to a first Bloom filter and into a second hash function that corresponds to a second Bloom filter located in the TLB. In this example, the ASID value is 16'hEF54. The hash value output of the first hash function in this example is a 3-bit value, 5, representing a location in Hash Vector 1. A three-bit value representing the decimal value 5 can be expressed as 3'd5. In this example, 5 represents the 5th most significant bit from right to left in TABLE 1. In other words, Hash1(ASID) = 5. The hash value output of the second hash function is a three-bit value representing 6, e.g., Hash2(ASID) = 3'd6. In this example, the hash functions compress the original 16-bit ASID value into a 3-bit value that represents a location in a hash vector of a Bloom filter.

The computing device performs the first fill operation (Fill 1) on each of the Bloom filters using the hash value outputs. The computing device sets the corresponding bit of each Bloom filter in accordance with the hash value outputs and the bit location, as shown above in Table 1. In this example, only 8 bit locations are shown, but in practice, each of the Bloom filters can include any appropriate number of bit locations, e.g., 16, 64, 128, or 1024, to name just a few examples.

In some implementations, the computing device performs multiple fill operations. For example, the computing device can input a second ASID value (ASID = 16'h9988) into the first hash function (Hash 1(ASID) = 3'd4)) and the second hash function (Hash 2(ASID) = 3'd2).

The computing device performs a second fill operation (Fill 2) using the second hash value outputs. The computing device sets the corresponding bits of the Bloom filters in accordance with the hash value outputs, as shown above. In some examples, the corresponding bits are already set in the Bloom filter, as seen in the second Bloom filter above corresponding to the second hash function. Therefore, the Bloom filters can depict which of the entries are not present in the TLB.

The computing device provides the ASID included in the TLB invalidation request to the multiple hash functions to obtain the respective hash values of the ASID (206). The computing device may input the ASID value to multiple hash functions to determine the hash value that may be present in the Bloom filter corresponding to the respective hash function.

The computing device determines whether any hash value representing the ASID value is not represented in a Bloom filter of the multiple Bloom filters (208) by performing lookup operations. For example, the computing device can receive an ASID value of 16'h9988, and the computing device can input the ASID value into the first hash function (Hash 1(ASID) = 3'd4) and the second hash function (Hash 2(ASID) = 3'd2).

The computing device can perform the lookup operation (e.g., search through each of the Bloom filters) to determine whether the hash values (e.g., hash value outputs) are present in any of the corresponding Bloom filters by determining if the bit indicated by each of the hash values is enabled in the Bloom filters. For example, the computing device searches for 3'd4 in the first Bloom filter and 3'd2 in the second Bloom filter. In this example, the computing device determines that neither of the hash values are present in either of the two Bloom filters, and therefore, the ASID is guaranteed to not be present in the TLB structure.

As a result, the computing device can bypass performing the TLB invalidation procedure of the requested ASID (210).

In another example, the computing device performs the lookup operation and determines that both of the hash values are present in both of the Bloom filters. The computing device therefore determines the ASID may be present in the TLB structure.

As a result, the computing device performs the TLB invalidation procedure (212).

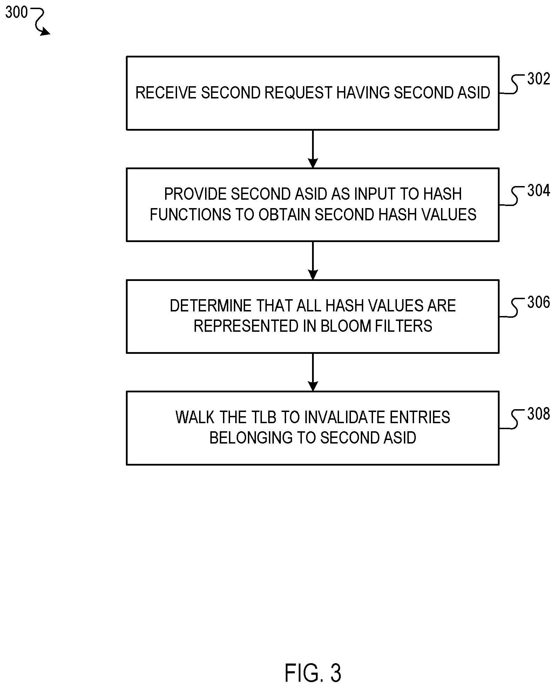

FIG. 3 is a flow diagram of an example process for performing the TLB invalidation procedure. For convenience, the process 300 will be described as being performed by a system of one or more computers located in one or more locations. For example, a computing device system, e.g., the system 100 of FIG. 1, appropriately programmed in accordance with this specification, can perform the process 300.

The computing device is configured to receive a second request with a second ASID (step 302). The request includes an instruction received from another computing device to remove the entries associated with the second ASID.

The computing device 102 provides the second ASID as input to each of the multiple hash functions to obtain a second set of multiple hash values (304). For example, the computing device can receive an ASID value of 16'h443D, and the computing device can input the ASID value into the first hash function (Hash 1(ASID) = 3'd5) and the second hash function (Hash 2(ASID) = 3'd6).

In this implementation, the computing device 102 determines that all the hash values of the second set of multiple hash values are represented in the multiple Bloom filters (306). For example, with reference to Table 1, the computing device can search through each of the Bloom filters to determine whether the hash values of 3'd5 and 3'd6 are present in any of the Bloom filters by determining if the bit indicated by each of the hash values is enabled in the Bloom filters. In this example, the computing device determines that both of the hash values are present in both of the Bloom filters, and therefore, the ASID may be present in the TLB structure.

As a result, the computing device performs the TLB invalidation procedure and walks the TLB to invalidate entries belonging to the second ASID (308).

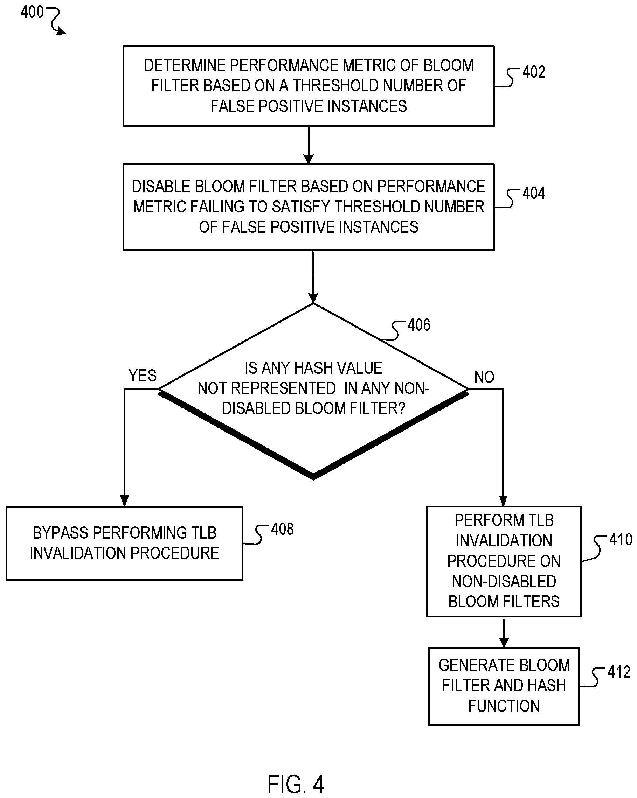

FIG. 4 is a flow diagram of an example process for determining whether to reinitialize a Bloom filter. For convenience, the process 400 will be described as being performed by a computing device, e.g., the computing device 102, of FIG. 1, appropriately configured in accordance with this specification.

The computing device can oversaturate the Bloom filters by performing fill operations, which can result in false positive instances. False positive instances are instances in which an ASID is not associated with any entries in the TLB, and the computing device determines that the hash value is represented in the Bloom filter (e.g., the computing device wrongly characterizes that the entry is represented in the TLB).

For example, the computing device can receive an ASID value of 16'h1122, and the computing device can input the ASID value into the first hash function (Hash 1(ASID) = 3'd4) and the second hash function (Hash 2(ASID) = 3'd6). The computing device can search through each of the Bloom filters in Table 1 to determine whether the corresponding hash values of 3'd4 and 3'd6 are present in any of the Bloom filters by determining if the bit indicated by each of the hash values is enabled in the Bloom filters. In this example, with reference to Table 1, the computing device determines that both of the hash values are present in both of the Bloom filters, and therefore, the ASID may possible be present in the TLB structure. As a result, the computing device performs the TLB invalidation procedure. However, the ASID value was not set in the Bloom filters as part of the fill operations described in FIG. 2, and therefore, this instance is a false positive instance. In some examples, the computing device can set most of bits in the Bloom filter (e.g., utilize a majority of the Bloom filter), which can result in the computing device determining than an entry is present in the TLB, when in actuality, the entry is not present.

To reduce the false positive instances, the computing device can determine a performance metric of a Bloom filter based on a threshold number of false positive instances (402).

The computing device is configured to disable a Bloom filter based on the performance metric of the Bloom filter failing to satisfy a threshold of false positive instances (404). The computing device can be configured with the threshold by another computing device. For example, the computing device can determine to disable the first Bloom filter associated with Hash 1 shown in Table 1 if the first Bloom filter exceeds a number of false positive instances.

The computing device can use the other Bloom filters that are not disabled to determine if an entry is in the TLB. The computing device determines if any hash value is not represented in a non-disabled Bloom filter of the multiple Bloom filters (406). For example, the computing device can continue to use the second Bloom filter associated with Hash 2 shown in Table 2. In this example, the computing device can determine a hash value of an ASID using the second hash function, and the computing device can determine whether the hash value is present in the second Bloom filter.

If any hash value is not represented in any non-disabled Bloom filter, the computing device can bypass performing the TLB invalidation procedure (408). For example, if the computing device determines that the hash value is not present in the second Bloom filter, the computing device determines that the ASID is not present in the TLB, and the computing device can bypass the TLB invalidation procedure.

If any hash value is represented in any of the non-disabled Bloom filters, the computing device can perform the TLB invalidation procedure (410). For example, if the computing device determines that the hash value is present in the second Bloom filter, the computing device determines that the ASID may be present in the TLB, and the computing device performs the TLB invalidation procedure.

Additionally, if the computing device determines that any hash value is represented in any of the non-disabled Bloom filters, the computing device can generate at least one other Bloom filter and a corresponding hash function (412). For example, if the computing device determines to perform the TLB invalidation procedure based on the hash value being present in the second Bloom filter, the computing device can reinitialize a Bloom filter and a hash function to replace the first Bloom filter and the first hash function. In another example, the computing device can additionally reinitialize another Bloom filter and another hash function to replace the second Bloom filter and the second hash function.

This specification uses the term "configured" in connection with systems and computer program components. For a system of one or more computers to be configured to perform particular operations or actions means that the system has installed on it software, firmware, hardware, or a combination of them that in operation cause the system to perform the operations or actions. For one or more computer programs to be configured to perform particular operations or actions means that the one or more programs include instructions that, when executed by data processing apparatus, cause the apparatus to perform the operations or actions.

Embodiments of the subject matter and the functional operations described in this specification can be implemented in digital electronic circuitry, in tangibly-embodied computer software or firmware, in computer hardware, including the structures disclosed in this specification and their structural equivalents, or in combinations of one or more of them. Embodiments of the subject matter described in this specification can be implemented as one or more computer programs, i.e., one or more modules of computer program instructions encoded on a tangible non-transitory storage medium for execution by, or to control the operation of, data processing apparatus. The computer storage medium can be a machine-readable storage device, a machine-readable storage substrate, a random or serial access memory device, or a combination of one or more of them. Alternatively or in addition, the program instructions can be encoded on an artificially-generated propagated signal, e.g., a machine-generated electrical, optical, or electromagnetic signal, that is generated to encode information for transmission to suitable receiver apparatus for execution by a data processing apparatus.

The term "data processing apparatus" refers to data processing hardware and encompasses all kinds of apparatus, devices, and machines for processing data, including by way of example a programmable processor, a computer, or multiple processors or computers. The apparatus can also be, or further include, special purpose logic circuitry, e.g., an FPGA (field programmable gate array) or an ASIC (application-specific integrated circuit). The apparatus can optionally include, in addition to hardware, code that creates an execution environment for computer programs, e.g., code that constitutes processor firmware, a protocol stack, a database management system, an operating system, or a combination of one or more of them.

A computer program, which may also be referred to or described as a program, software, a software application, an app, a module, a software module, a script, or code, can be written in any form of programming language, including compiled or interpreted languages, or declarative or procedural languages; and it can be deployed in any form, including as a stand-alone program or as a module, component, subroutine, or other unit suitable for use in a computing environment. A program may, but need not, correspond to a file in a file system. A program can be stored in a portion of a file that holds other programs or data, e.g., one or more scripts stored in a markup language document, in a single file dedicated to the program in question, or in multiple coordinated files, e.g., files that store one or more modules, sub-programs, or portions of code. A computer program can be deployed to be executed on one computer or on multiple computers that are located at one site or distributed across multiple sites and interconnected by a data communication network.

The processes and logic flows described in this specification can be performed by one or more programmable computing devices executing one or more computer programs to perform functions by operating on input data and generating output. The processes and logic flows can also be performed by special purpose logic circuitry, e.g., an FPGA or an ASIC, or by a combination of special purpose logic circuitry and one or more programmed computing devices.

Computing devices suitable for the execution of a computer program can be based on general or special purpose microprocessors or both, or any other kind of central processing unit. Generally, a central processing unit will receive instructions and data from a read-only memory or a random access memory or both. The essential elements of a computing device are a processing unit for performing or executing instructions and one or more memory devices for storing instructions and data. The computing devices and the memory can be supplemented by, or incorporated in, special purpose logic circuitry. A computing device can also be operatively coupled to receive data from or transfer data to, or both, one or more mass storage devices for storing data, e.g., magnetic, magneto-optical disks, or optical disks. However, a computing device need not have such devices. Moreover, a computing device can be embedded in another device, e.g., a mobile telephone, a personal digital assistant (PDA), a mobile audio or video player, a game console, a Global Positioning System (GPS) receiver, or a portable storage device, e.g., a universal serial bus (USB) flash drive, to name just a few.

Computer-readable media suitable for storing computer program instructions and data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks.

In addition to the embodiments described above, the following embodiments are also innovative:
Embodiment 1 is a method comprising:
   receiving a request to perform the TLB invalidation procedure, wherein the request specifies an application space identifier for a plurality of virtual addresses;
   maintaining a plurality of Bloom filters, wherein each Bloom filter of the plurality of Bloom filters corresponds to a respective hash function of a plurality of hash functions;
   providing the application space identifier as input to each of the plurality of hash functions to obtain a plurality of hash values;
   determining that one of the hash values is not represented in one of the Bloom filters; and
   in response, bypassing performing the TLB invalidation procedure.
Embodiment 2 is the method of embodiment 1, wherein bypassing performing the TLB invalidation procedure comprises bypassing walking entries of the TLB to search for entries having the application space identifier.
Embodiment 3 is the method of any one of embodiments 1-2, further comprising:
   receiving a second request having a second application space identifier;
   providing the second application space identifier as input to each of the plurality of hash functions to obtain a second plurality of hash values;
   determining that all hash values are represented in the plurality of Bloom filters; and
   in response, walking the TLB to invalidate entries belonging to the second application space identifier.
Embodiment 4 is the method of any one of embodiments 1-3, wherein the application space identifier represents an application executing on the computing device using the plurality of virtual addresses.
Embodiment 5 is the method of any one of embodiments 1-4, wherein providing the application space identifier as input to each of the plurality of hash functions to obtain a plurality of hash values comprises, for each application space identifier:
   initializing a vector comprising a set of values;
   generating a hash value of the application space identifier using a hash function of the plurality of hash functions; and
   setting the hash value of the application space identifier by updating the values of the vector.
Embodiment 6 is the method of any one of embodiments 1-5, wherein maintaining a plurality of Bloom filters, for each Bloom filter:
   determining a performance metric of the Bloom filter, wherein the performance metric is based at least in part on a threshold number of false positive instances.
Embodiment 7 is the method of embodiment 6, further comprising:
   disabling the Bloom filter based at least in part on the performance metric failing to satisfy the threshold number of false positive instances.
Embodiment 8 is the method of embodiment 6, wherein false positive instances are instances in which an application space identifier is not associated with any entries in the TLB, and the computing device determines that the hash value is represented in the Bloom filter.
Embodiment 9 is the method of embodiment 3, wherein walking the TLB to invalidate entries belonging to the second application space identifier further comprises:
   walking the TLB to invalidate entries based at least in part on the application space identifier being represented in at least one of non-disabled Bloom filters of the plurality of Bloom filters.
Embodiment 10 is the method of embodiment 7, further comprising:
   generating a Bloom filter and a corresponding hash function based at least in part on disabling the Bloom filter and performing the TLB invalidation procedure.
Embodiment 11 is a computing device configured to perform the operations of any one of embodiments 1-11.

While this specification contains many specific implementation details, these should not be construed as limitations on the scope of any invention or on the scope of what may be claimed, but rather as descriptions of features that may be specific to particular embodiments of particular inventions. Certain features that are described in this specification in the context of separate embodiments can also be implemented in combination in a single embodiment. Conversely, various features that are described in the context of a single embodiment can also be implemented in multiple embodiments separately or in any suitable subcombination. Moreover, although features may be described above as acting in certain combinations and even initially be claimed as such, one or more features from a claimed combination can in some cases be excised from the combination, and the claimed combination may be directed to a subcombination or variation of a subcombination.

Similarly, while operations are depicted in the drawings and recited in the claims in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system modules and components in the embodiments described above should not be understood as requiring such separation in all embodiments, and it should be understood that the described program components and systems can generally be integrated together in a single software product or packaged into multiple software products.

Particular embodiments of the subject matter have been described. Other embodiments are within the scope of the following claims. For example, the actions recited in the claims can be performed in a different order and still achieve desirable results. As one example, the processes depicted in the accompanying figures do not necessarily require the particular order shown, or sequential order, to achieve desirable results. In some cases, multitasking and parallel processing may be advantageous.

Aspects of the invention may be further appreciated from references to the following numbered clauses.
1. A method performed by a computing device for determining whether to perform a translation lookaside buffer (TLB) invalidation procedure, the method comprising:
   receiving a request to perform the TLB invalidation procedure, wherein the request specifies an application space identifier for a plurality of virtual addresses;
   maintaining a plurality of Bloom filters, wherein each Bloom filter of the plurality of Bloom filters corresponds to a respective hash function of a plurality of hash functions;
   providing the application space identifier as input to each of the plurality of hash functions to obtain a plurality of hash values;
   determining that one of the hash values is not represented in one of the Bloom filters; and
   in response, bypassing performing the TLB invalidation procedure.
2. The method of clause 1, wherein bypassing performing the TLB invalidation procedure comprises bypassing walking entries of the TLB to search for entries having the application space identifier.
3. The method of any one of clauses 1-2, further comprising:
   receiving a second request having a second application space identifier;
   providing the second application space identifier as input to each of the plurality of hash functions to obtain a second plurality of hash values;
   determining that all hash values are represented in the plurality of Bloom filters; and
   in response, walking the TLB to invalidate entries belonging to the second application space identifier.
4. The method of any one of clauses 1-3, wherein the application space identifier represents an application executing on the computing device using the plurality of virtual addresses.
5. The method of any one of clauses 1-4, wherein providing the application space identifier as input to each of the plurality of hash functions to obtain a plurality of hash values comprises, for each application space identifier:
   initializing a vector comprising a set of values;
   generating a hash value of the application space identifier using a hash function of the plurality of hash functions; and
   setting the hash value of the application space identifier by updating the values of the vector.
6. The method of any one of clauses 1-5, wherein maintaining a plurality of Bloom filters, for each Bloom filter:
   determining a performance metric of the Bloom filter, wherein the performance metric is based at least in part on a threshold number of false positive instances.
7. The method of any one of clause 6, further comprising:
   disabling the Bloom filter based at least in part on the performance metric failing to satisfy the threshold number of false positive instances.
8. The method of clause 6, wherein false positive instances are instances in which an application space identifier is not associated with any entries in the TLB, and the computing device determines that the hash value is represented in the Bloom filter.
9. The method of clause 3, wherein walking the TLB to invalidate entries belonging to the second application space identifier further comprises:
   walking the TLB to invalidate entries based at least in part on the application space identifier being represented in at least one of non-disabled Bloom filters of the plurality of Bloom filters.
10. The method of clause 7, further comprising:
   generating a Bloom filter and a corresponding hash function based at least in part on disabling the Bloom filter and performing the TLB invalidation procedure.
11. A system for determining whether to perform a translation lookaside (TLB) invalidation procedure, the system comprising:
   a memory that is configured to store entries of the TLB; and
   one or more computers that are configured to implement a plurality of computing devices, wherein each computing device is configured to repeatedly perform operations comprising:
      receiving a request to perform the TLB invalidation procedure, wherein the request specifies an application space identifier for a plurality of virtual addresses;
      maintaining a plurality of Bloom filters, wherein each Bloom filter of the plurality of Bloom filters corresponds to a respective hash function of a plurality of hash functions;
      providing the application space identifier as input to each of the plurality of hash functions to obtain a plurality of hash values;
      determining that one of the hash values is not represented in one of the Bloom filters; and
      in response, bypassing performing the TLB invalidation procedure.
12. The system of clause 11, wherein bypassing performing the TLB invalidation procedure comprises bypassing walking the entries of the TLB to search for entries having the application space identifier.
13. The system of any one of clauses 11-12, further comprising:
   receiving a second request having a second application space identifier;
   providing the second application space identifier as input to each of the plurality of hash functions to obtain a second plurality of hash values;
   determining that all hash values are represented in the plurality of Bloom filters; and
   in response, walking the TLB to invalidate entries belonging to the second application space identifier.
14. The system of any one of clauses 11-13, wherein the application space identifier represents an application executing on the computing device using the plurality of virtual addresses.
15. The system of any one of clauses 11-14, wherein providing the application space identifier as input to each of the plurality of hash functions to obtain a plurality of hash values comprises, for each application space identifier:
   initializing a vector comprising a set of values;
   generating a hash value of the application space identifier using a hash function of the plurality of hash functions; and
   setting the hash value of the application space identifier by updating the values of the vector.
16. The system of any one of clauses 11-15, wherein maintaining a plurality of Bloom filters, for each Bloom filter:
   determining a performance metric of the Bloom filter, wherein the performance metric is based at least in part on a threshold number of false positive instances.
17. The system of clause 16, further comprising:
   disabling the Bloom filter based at least in part on the performance metric failing to satisfy the threshold number of false positive instances.
18. The system of clause 16, wherein false positive instances are instances in which an application space identifier is not associated with any entries in the TLB, and the computing device determines that the hash value is represented in the Bloom filter.
19. The system of clause 13, wherein walking the TLB to invalidate entries belonging to the second application space identifier further comprises:
   walking the TLB to invalidate entries based at least in part on the application space identifier being represented in at least one of non-disabled Bloom filters of the plurality of Bloom filters.
20. The system of clause 17, further comprising:
   generating a Bloom filter and a corresponding hash function based at least in part on disabling the Bloom filter and performing the TLB invalidation procedure.

## Claims

1. A method performed using a translation lookaside buffer, TLB, the method comprising:
receiving a request that specifies an application space identifier of an application executed on a computing device;
providing the application space identifier as an input to a first hash function corresponding to a first bloom filter of the TLB;
generating, using the first hash function, a first hash value from the application space identifier by applying the first hash function to the input;
comparing the first hash value to a second hash value set in the first bloom filter; and
determining whether to perform a TLB invalidation procedure based on a result of comparing the first hash value to the second hash value.

2. The method of claim 1, further comprising:
performing the TLB invalidation procedure when a result of comparing the first hash value to the second hash value indicates the first hash value or the application space identifier is present in the TLB.

3. The method of claim 2, wherein performing the TLB invalidation procedure comprises:
walking entries of the TLB; and
invalidating one or more of the entries of the TLB that belong to the application space identifier in response to walking the TLB.

4. The method of claim 3, wherein invalidating one or more entries of the entries of the TLB comprises:
invalidating one or more entries based at least in part on the application space identifier being represented in at least one non-disabled bloom filter corresponding at least to the first bloom filter.

5. The method of any one of the preceding claims, further comprising:
bypassing performing the TLB invalidation procedure when a result of comparing the first hash value to the second hash value indicates the first hash value or the application space identifier is *not* present in the TLB.

6. The method of claim 5, wherein bypassing performing the TLB invalidation procedure comprises:
bypassing walking entries of the TLB to search for entries having the application space identifier based on the result of comparing the first hash value to the second hash value.

7. The method of any one of the preceding claims, wherein the application space identifier corresponds to a plurality of virtual addresses that are used by the application when the application is executing on the computing device.

8. The method of claim 7, wherein providing the application space identifier as an input to a first hash function corresponding to a first bloom filter comprises:
initializing a vector comprising a set of values;
generating a hash value of the application space identifier using a hash function of a plurality of hash functions; and
setting the hash value of the application space identifier by updating the values of the vector.

9. The method of any one of the preceding claims, further comprising:
maintaining a second bloom filter in the TLB;
providing the application space identifier as an input to second hash function corresponding to the second bloom filter of the TLB;
generating, using the second hash function, a second hash value from the application space identifier by applying the second hash function to the input; and
determining whether to perform the TLB invalidation procedure based on the second hash value being represented in the second bloom filter.

10. The method of any one of the preceding claims, wherein comparing the first hash value to a second hash value set in the bloom filter further comprises:
determining that the first hash value is not equal to the second hash value.

11. The method of any one of the preceding claims, further comprising:
determining a performance of the bloom filter, wherein the performance metric is based at least in part on a threshold number of false positive instances.

12. The method of claim 11, further comprising:
disabling the first bloom filter based at least in part on the performance metric failing to satisfy the threshold number of false positive instances.

13. The method of claim 11 or 12, wherein false positive instances are instances in which an application space identifier is not associated with any entries in the TLB, and the computing device determines that the first hash value is represented in the Bloom filter.

14. The method of any one of the preceding claims, performed by a computing device.

15. A system comprising:
a memory that is configured to store entries of a translation lookaside buffer; and
one or more computers that are configured to implement a plurality of computing devices, wherein each computing device is configured to repeatedly perform operations comprising a method according to any one of the preceding claims.
